# EUROPEAN PATENT SPECIFICATION

(11) **EP 3 401 351 B1**
(45) Date of publication and mention of the grant of the patent: **13.05.2020**
(21) Application number: 17736165.6
(22) Date of filing: 09.01.2017
(51) Int. Cl.: C08G 73/06, C08L 79/04, C08K 3/00, C08J 5/24

(54) **PHTHALONITRILE RESIN**
PHTHALONITRILHARZ
RÉSINE DE PHTALONITRILE

(30) Priority: 07.01.2016 KR 20160001941
(43) Date of publication of application: 14.11.2018
(73) Proprietor: LG Chem, Ltd., Seoul 07336 (KR)
(72) Inventor: LEE, Seung Hee, Daejeon 34122 (KR); KIM, Sang Woo, Daejeon 34122 (KR); AHN, Ki Ho, Daejeon 34122 (KR)
(74) Representative: Goddar, Heinz J.
(86) International application number: PCT/KR2017/000246
(87) International publication number: WO 2017/119793

(56) References cited:
- CN-A- 103 834 008
- KR-B1- 100 558 158
- SU-A1- 1 509 352
- US-A- 4 410 676
- US-A- 4 448 940
- US-A- 5 003 039

## Description

### Technical Field

The present application relates to a phthalonitrile resin, a polymerizable composition, a prepolymer, a composite, and a preparation method and use thereof.

### Background Art

A phthalonitrile resin can be used in various applications. For example, a composite formed by impregnating the phthalonitrile resin with a filler such as glass fiber or carbon fiber can be used as a material for automobiles, airplanes, ships, and the like. The process for producing the composite may comprise, for example, a process of mixing a mixture of phthalonitrile and a curing agent or a prepolymer formed by reaction of the mixture, with the filler and then curing the mixture (see, for example, Patent Document 1).

In order to effectively perform the process for producing the composite, it is required that phthalonitrile, which is a monomer, or a polymerizable composition or prepolymer formed therefrom has appropriate fusiblity and fluidity, and a so-called process window is wide.

Furthermore, when the mixture of phthalonitrile and a curing agent or the prepolymer contains voids or generates voids during a processing or curing process, deterioration of physical properties in the composite may occur, and thus such a problem should also be considered.

### <Prior Art Documents>

### <Patent Documents>

(Patent Document 1) Korean Patent No. 0558158
SU 1509352 A1, US 5,003,039 A, CN 103834008 A, KR 100558158 B1 and US 4,410,676 A disclose a phthalonitrile resin comprising a polymerized unit derived from a compound of Formula 1 below: 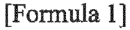 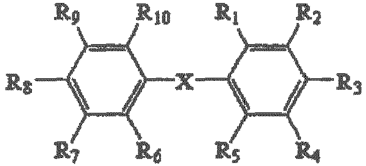 wherein, R₁ to R₁₀ are each independently hydrogen, an alkyl group, an alkoxy group, an aryl group or a substituent of Formula 2 below, provided that at least one of R₁ to R₅ is a substituent of Formula 2 below and at least one of R₆ to R₁₀ is a substituent of Formula 2 below, and X is an alkylene group or an alkylidene group, 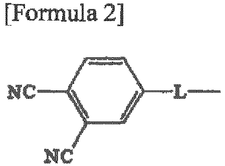 wherein, L is an alkylene group, an alkylidene group, an oxygen atom or a sulfur atom.

### Disclosure

### Technical Problem

The present application provides a phthalonitrile resin, a polymerizable composition, a prepolymer, a composite, a precursor of the composite, and a preparation method and use thereof. The present application can provide phthalonitrile, and a polymerizable composition and prepolymer using the same, which can exhibit a suitable processing temperature and a wide window process, have excellent curability and form a composite having excellent physical properties.

### Technical Solution

The present application relates to a phthalonitrile resin according to claim 1, a polymerizable composition according to claim 6, a prepolymer according to claim 12, a composite according to claim 13 and a method for preparing a composite according to claim 15. Further embodiments are disclosed in the dependent claims. The phthalonitrile resin comprises a polymerized unit derived from a compound of Formula 1 below. In the present application, the term polymerized unit derived from a certain compound may mean a skeleton of a polymer formed by polymerization or curing of the compound. For example, the polymerized unit derived from the compound of Formula 1 below may be a structure in a state where a cyano group in the compound of Formula 1 below is reacted with a functional group present in a curing agent, such as amine or a hydroxy group.

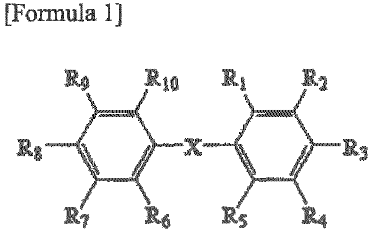

In Formula 1, R₁ to R₁₀ are each independently hydrogen, an alkyl group, an alkoxy group, an aryl group or a substituent of Formula 2 below, provided that at least one of R₁ to R₅ is a substituent of Formula 2 below and at least one of R₆ to R₁₀ is a substituent of Formula 2 below, and X is an alkylene group or an alkylidene group,

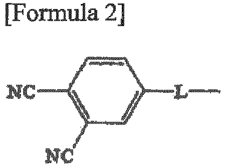

In Formula 2, L is an alkylene group, an alkylidene group, an oxygen atom or a sulfur atom.

In the present application, the term alkyl group may be an alkyl group having 1 to 20 carbon atoms, 1 to 16 carbon atoms, 1 to 12 carbon atoms, 1 to 8 carbon atoms or 1 to 4 carbon atoms, unless otherwise specified. The alkyl group may be linear, branched or cyclic and, if necessary, may be substituted with one or more substituents.

In the present application, the term alkoxy group may be an alkoxy group having 1 to 20 carbon atoms, 1 to 16 carbon atoms, 1 to 12 carbon atoms, 1 to 8 carbon atoms or 1 to 4 carbon atoms, unless otherwise specified. The alkoxy groups may be linear, branched or cyclic and, if necessary, may be substituted with one or more substituents.

In the present application, the term aryl group may mean a monovalent residue derived from a benzene ring, a compound comprising a benzene ring or any one derivative of the forgoing, unless otherwise specified. Here, may mean a compound having a structure in which two or more benzene rings are condensed while sharing one or two carbon atoms or are directly linked or a structure linked by an appropriate linker. Such a compound may be exemplified by biphenyl or naphthalene, and the like. The aryl group may comprise, for example, 6 to 25, 6 to 20, or 6 to 12 carbon atoms. A specific kind of the aryl group can be exemplified by a phenyl group, a benzyl group, a biphenyl group or a naphthalenyl group, and the like, without being limited thereto. Also, in the category of the aryl group in the present application, not only a functional group commonly referred to as an aryl group but also an aralkyl group or an arylalkyl group, and the like may be included.

In the present application, the term alkylene group or alkylidene group may mean an alkylene group or alkylidene group having 1 to 20 carbon atoms, 1 to 16 carbon atoms, 1 to 12 carbon atoms, 1 to 8 carbon atoms, or 1 to 4 carbon atoms, unless otherwise specified. The alkylene group or alkylidene group may be linear, branched or cyclic. In addition, the alkylene or alkylidene group may be optionally substituted with one or more substituents.

In the present application, as the substituent with which the alkyl group, alkoxy group, aryl group, alkylene group or alkylidene group may be optionally substituted, halogen such as chlorine or fluorine, an epoxy group such as a glycidyl group, an epoxyalkyl group, a glycidoxyalkyl group or an alicyclic epoxy group, an acryloyl group, a methacryloyl group, an isocyanate group, a thiol group, an alkyl group, an alkoxy group or an aryl group, and the like can be exemplified, without being limited thereto.

In Formula 1, R₁ to R₁₀ are each independently hydrogen, an alkyl group, an alkoxy group or an aryl group, provided that at least one of R₁ to R₅ is a substituent of Formula 2 above and at least one of R₆ to R₁₀ is a substituent of Formula 2 above. In the substituent of Formula 2, L of Formula 2 above may be linked to Formula 1. Substituents other than the substituent of Formula 2 may be each independently hydrogen, an alkyl group or an alkoxy group, or hydrogen or an alkyl group.

In Formula 1, X may be an alkylene group or an alkylidene group, and in another example, an alkylene group or alkylidene group having 1 to 20 carbon atoms, 1 to 16 carbon atoms, 1 to 12 carbon atoms, 1 to 8 carbon atoms or 1 to 4 carbon atoms, or a methylene group.

In Formula 2, L may be an alkylene group, an alkylidene group, an oxygen atom or a sulfur atom, and in another example, an oxygen atom.

The phthalonitrile resin can be prepared by polymerizing a composition, in which the compound of Formula 1 and a curing agent to be described below are combined, and in this case, the specific polymerization method is not particularly limited, and a known method for preparing a phthalonitrile resin is applied.

The phthalonitrile resin may also comprise polymerized units of two or more compounds having different structures from each other while belonging to the category of Formula 1. Such a phthalonitrile resin can be formed by polymerizing a polymerizable composition in which the two or more compounds are mixed with a curing agent.

The phthalonitrile resin comprises, as the polymerized unit derived from the compound of Formula 1, polymerized units of two or more compounds among compounds represented by Formulas 3 to 5 below, respectively.

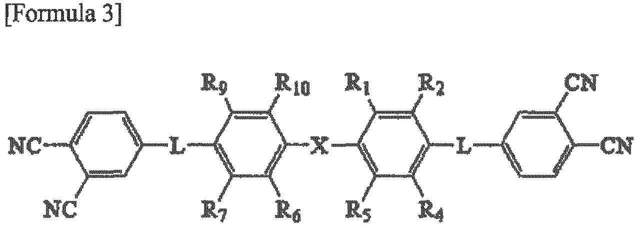

In Formula 3, R₁, R₂, R₄, R₅, R₆, R₇, R₉ and R₁₀ are each independently hydrogen, an alkyl group, an alkoxy group or an aryl group, X is an alkylene group or an alkylidene group, and L is an alkylene group, an alkylidene group, an oxygen atom or a sulfur atom.

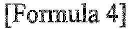

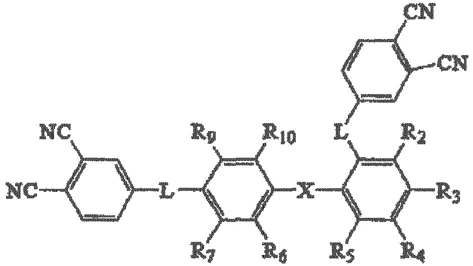

In Formula 4, R₂, R₃, R₄, R₅, R₆, R₇, R₉ and R₁₀ are each independently hydrogen, an alkyl group, an alkoxy group or an aryl group, X is an alkylene group or an alkylidene group, and L is an alkylene group, an alkylidene group, an oxygen atom or a sulfur atom.

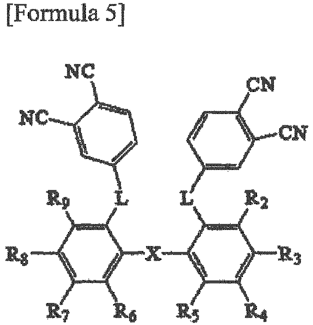

In Formula 5, R₂, R₃, R₄, R₅, R₆, R₇, R₈ and R₉ are each independently hydrogen, an alkyl group, an alkoxy group or an aryl group, X is an alkylene group or an alkylidene group, and L is an alkylene group, an alkylidene group, an oxygen atom or a sulfur atom.

In Formulas 3 to 5, R₁ to R₁₀ may be hydrogen, an alkyl group or an alkoxy group, or may be a hydrogen atom or an alkyl group, in another example.

Also, the phthalonitrile resin may comprise polymerized units derived from at least two or more of the compounds of Formulas 3 to 5, or may comprise polymerized units derived from all the three compounds.

In one example, the phthalonitrile resin may also comprise a polymerized unit derived from the compound of Formula 4 and/or Formula 5 above while comprising at least a polymerized unit derived from the compound of Formula 3. In such a case, the polymerized unit derived from the compound of Formula 3 may be contained as a main component. Here, the fact to be included as a main component may mean a case where the polymerized unit derived from Formula 3 is at least 55% based on the weight in the entire phthalonitrile-derived polymerized units.

Also, in such a case, the phthalonitrile resin may comprise about 1 to 200 parts by weight of polymerized units derived from the compounds of Formulas 4 and/or 5 relative to 100 parts by weight of the polymerized unit derived from the compound of Formula 3. In this specification, the unit part by weight may mean a weight ratio between the components, unless otherwise specified. Here, in another example, the weight ratio of the polymerized units derived from the compounds of Formulas 4 and/or 5 may be 10 parts by weight or more, 20 parts by weight or more, 30 parts by weight or more, 40 parts by weight or more, 50 parts by weight or more, or 60 parts by weight or more. Furthermore, in another example, the weight ratio of the polymerized units derived from the compounds of Formulas 4 and/or 5 may be 190 parts by weight or less, 180 parts by weight or less, 170 parts by weight or less, 160 parts by weight or less, 150 parts by weight or less, 140 parts by weight or less, 130 parts by weight or less, 120 parts by weight or less, 110 parts by weight or less, 100 parts by weight or less, 90 parts by weight or less, 80 parts by weight or less, or 70 parts by weight or less. Under the ratio range as above, it is possible to maintain an appropriate processing temperature, and to secure a wide process window.

Also, when the phthalonitrile resin comprises, as the polymerized unit derived from the compound of Formula 1, all the polymerized units derived from the compounds of Formulas 3 to 5, the polymerized unit derived from the compound of Formula 4 may be contained in an amount of 1 to 150 parts by weight relative to 100 parts by weight of the polymerized unit derived from the compound of Formula 3 and the polymerized unit derived from the compound of Formula 5 may also be contained in an amount of 1 to 150 parts by weight relative to 100 parts by weight of the polymerized unit derived from the compound of Formula 3. Here, in another example, the weight ratio of the polymerized unit derived from the compound of Formula 4 or 5 may be 10 parts by weight or more, 20 parts by weight or more, 30 parts by weight or more, 40 parts by weight or more, 50 parts by weight or more, or 60 parts by weight or more. Also, in another example, the weight ratio of the polymerized unit derived from the compound of Formula 4 or 5 may be 140 parts by weight or less, 130 parts by weight or less, 120 parts by weight or less, 110 parts by weight or less, 100 parts by weight or less, 90 parts by weight or less, 80 parts by weight or less, 70 parts by weight or less, 60 parts by weight or less, 50 parts by weight or less, 40 parts by weight or less, 30 parts by weight or less, 20 parts by weight or less, or 10 parts by weight or less. Under the ratio range as above, it is possible to maintain an appropriate processing temperature, and to secure a wide process window.

The above-mentioned compounds of Formulas 1 and 3 to 5 or combinations thereof are capable of exhibiting a proper processing temperature and process window in the process of preparing the phthalonitrile resin due to the structural features, and have excellent reactivity with the curing agent.

Accordingly, it is possible to provide a polymerizable composition and a prepolymer which may have excellent curability, exhibit a suitable processing temperature and a wide process window, and form a composite having excellent physical properties.

In one example, the processing temperature of the compound may be in a range of, for example, 50°C to 200°C. In the present application, the term processing temperature may mean a temperature where the compound, and the following polymerizable composition or prepolymer comprising the same, and the like are present in a processable state. Such a processing temperature may be, for example, a softening point, a melting temperature (Tm), or a glass transition temperature (Tg). Such a range is advantageous for realizing a polymerizable composition or prepolymer which can exhibit appropriate fluidity and processability, secure a wide process window, and form a composite of excellent physical properties.

The compounds of Formulas 1 and 3 to 5 can be synthesized by a known synthesis method of organic compounds. For example, the compounds of Formulas 1 and 3 to 5 can be synthesized by a reaction known as a so-called nitro displacement reaction, for example, a method of reacting a compound containing a hydroxy group and a compound containing a nitrile group in the presence of a basic catalyst or the like.

The phthalonitrile resin may also further comprise polymerized units of other phthalonitrile compounds in addition to the polymerized units of the compounds of Formulas 1 and 3 to 5. In such a case, the kind of the phthalonitrile compound that can be selected and used is not particularly limited, and known compounds noted to be useful for formation of the phthalonitrile resin and control of its physical properties can be applied. As an example of such a compound, compounds can be exemplified, which are known in U.S. Patent Nos. 4,408,035, 5,003,039, 5,003,078, 5,004,801, 5,132,396, 5,139,054, 5,208,318, 5,237,045, 5,292,854, or 5,350,828, and various compounds known in the art besides those described above can be included in the above examples.

In the phthalonitrile resin, the polymerized units of the compound of Formula 1 or the like may be a polymerized unit formed by the reaction of the compound of Formula 1 with a curing agent. Therefore, the phthalonitrile resin may further comprise a polymerized unit of the curing agent. The kind of the curing agent is not particularly limited as long as it can react with the compound of the Formula 1 to form a polymer, and for example, any compound can be used as long as it is a compound known to be useful for formation of a so-called phthalonitrile resin. The curing agent known to be suitable for the formation of the phthalonitrile resin can be exemplified by an aromatic amine compound, a phenol compound, an inorganic acid, an organic acid, a metal or a metal salt, but is not limited thereto.

In one example, an amine compound such as an aromatic amine compound or a hydroxy compound such as phenol can be used as a curing agent. In the present application, the hydroxy compound may mean a compound containing at least one or two hydroxy groups in the molecule. Curing agents which can cure a phthalonitrile compound to form a resin are variously known, and such curing agents can be applied in most cases in the present application.

In one example, as the curing agent, a compound of Formula 6 below may be used.

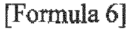

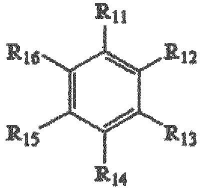

In Formula 6, R₁₁ to R₁₆ are each independently hydrogen, an alkyl group, an alkoxy group, an aryl group, an amine group or a substituent of Formula 7 below, provided that at least two of R₁₁ to R₁₆ are an amine group or a substituent of Formula 7 below.

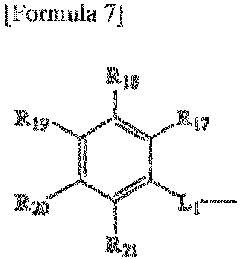

In Formula 7, L₁ is an alkylene group, an alkylidene group, an oxygen atom or a sulfur atom, and R₁₇ to R₂₁ are hydrogen, an alkyl group, an alkoxy group, an aryl group or an amine group, provided that at least one of R₁₇ to R₂₁ is an amine group.

When the substituent of Formula 7 is present, L₁ in the above structure may be linked to the benzene ring of Formula 6.

In one example, the curing agent may be a compound wherein two of R₁₁ to R₁₆ in Formula 6 are the substituent of Formula 7. In this case, the two substituents of Formula 7 in Formula 6 may be a structure in which the other one is present at otho-, meta- or para-position based on any one of them. Also, in this case, any one of R₁₈ to R₂₀ in the substituent of Formula 7 may be an amine group.

The present application also relates to a polymerizable composition. The polymerizable composition may comprise the above-described compound of Formula 1.

The polymerizable composition may further comprise a curing agent together with the compound of Formula 1.

The polymerizable composition may comprise any one or two or more of Formulas 3 to 5 as the compound of Formula 1. For example, the polymerizable composition may comprise the compound of Formula 3 and the compound of Formula 4 or 5, or all the compounds of Formulas 3 to 5.

In the above case, the weight ratio of the compound of each Formula in Formulas 3 to 5 may be equally applied by the items regarding the weight ratios of the polymerized units derived from the compounds as described above.

The kind of the curing agent that can be used in the polymerizable composition is not particularly limited, and for example, curing agents such as those already described can be used.

The ratio of the curing agent in the polymerizable composition is not particularly limited. For example, the ratio can be adjusted so that the desired curability can be ensured in consideration of the ratio or kind of the curable component, such as the compound of Formula 1, contained in the composition. For example, the curing agent may be contained in an amount of about 0.02 to 1.5 moles per mole of the compound of Formula 1 (when two or more of the compounds of Formulas 3 to 5 is included therein, the whole compounds) contained in the polymerizable composition. However, the above ratio is only an example of the present application. In general, if the ratio of the curing agent in the polymerizable composition is increased, the process window tends to be narrowed or widened depending on the kind of the curing agent, whereby processability may be deteriorated or high temperature curing conditions may be required. In addition, if the ratio of the curing agent is lowered, the curability tends to become insufficient, and thus the ratio of the curing agent may be appropriately selected in consideration of these points.

The polymerizable composition of the present application can exhibit a proper processing temperature and a wide process window while having excellent curability.

In one example, the processing temperature, i.e., the melting temperature or the glass transition temperature, of the polymerizable composition may be in the range of 50°C to 200°C or 100°C to 200°C. In this case, the process window of the polymerizable composition, that is, the absolute value of the difference (To - Tp) between the processing temperature (Tp) and the curing reaction onset temperature (To) of the compound of Formula 1 or the like and the curing agent may be 50°C or higher, 70°C or higher or 100°C or higher. In the present application, the term curing reaction onset temperature may mean a temperature at the time when polymerization or curing of the polymerizable composition or a prepolymer to be described below is started. In one example, the curing reaction onset temperature (To) may be higher than the processing temperature. Such a range may be advantageous for securing proper processability, using the polymerizable composition, for example, in the process of producing a composite to be described below. The upper limit of the process window is not particularly limited, but for example, the absolute value of the difference (To - Tp) between the processing temperature (Tp) and the curing reaction onset temperature (To) may be 600°C or lower, 500°C or lower, 400°C or lower, 300°C or lower, or 200°C or lower.

The polymerizable composition may further comprise various additives. As an example of such an additive, various fillers can be exemplified. The kind of the material that can be used as the filler is not particularly limited, and all the known fillers suitable depending on the intended use may be used. The exemplary filler includes a metal material, a ceramic material, glass, a metal oxide, a metal nitride or a carbon-based material, and the like can be exemplified, but is not limited thereto. In addition, the form of the filler is also not particularly limited and may be various forms, for example, a fibrous material such as aramid fiber, glass fiber, carbon fiber or ceramic fiber, or a woven fabric, nonwoven fabric, string or cord formed by the material, particles comprising nanoparticles, polygons or other amorphous forms, and the like. Here, as the carbon-based material, graphite, graphene or carbon nanotubes, and the like, or derivatives and isomers such as their oxides can be exemplified.

The present application also relates to a prepolymer formed by the reaction of the above-described polymerizable composition.

In the present application, the term prepolymer state is a state where the compound of Formula 1 and the curing agent undergo a certain degree of polymerization in the polymerizable composition (for example, a state where polymerization in a step of a so-called stage A or B has occurred), but do not reach the completely polymerized state and exhibit appropriate fluidity, and for example may mean a state capable of processing a composite, as described below. In one example, the prepolymer state may mean a state where polymerization of the polymerizable composition proceeds to some extent.

The prepolymer may also exhibit excellent curability, a suitable processing temperature and a wide process window. In addition, the prepolymer can exhibit stability over time even when it is stored at room temperature for a long time.

For example, the processing temperature, for example, the glass transition temperature or the melting temperature, of the prepolymer may be in the range of 50°C to 200°C or 100°C to 200°C. In such a case, the process window of the prepolymer, that is, the absolute value of the difference (To - Tp) between the processing temperature (Tp) and the curing reaction onset temperature (To) of the prepolymer may be 50°C or higher, 70°C or higher, or 100°C or higher. In one example, the curing reaction onset temperature (To) may be higher than the processing temperature (Tp). Such a range may be advantageous for securing appropriate processability, using the prepolymer, for example, in the process of preparing a composite to be described below. Here, the upper limit of the process window is not particularly limited, but for example, the absolute value of the difference (To - Tp) between the processing temperature (Tp) and the curing reaction onset temperature (To) may be 600°C or lower, 500°C or lower, 400°C or lower, 300°C or lower, or 200°C or lower.

The prepolymer may further comprise any known additive in addition to the above components. As an example of such an additive, the above-mentioned fillers and the like can be exemplified, without being limited thereto.

The present application also relates to a composite. The composite may comprise the above-described phthalonitrile resin and filler. As described above, through the compound of Formula 1 or the like of the present invention excellent curability, a suitable processing temperature and a wide process window can be achieved, and accordingly, a so-called reinforced resin composite (reinforced polymer composite) comprising various fillers can be easily formed. The composite thus formed may comprise the phthalonitrile resin and the filler, and for example, may be applied to various applications including durables, and the like for automobiles, airplanes, ships or the like.

The kind of the filler is not particularly limited and may be suitably selected in consideration of the intended use. The usable filler can be exemplified by those already described, but is not limited thereto.

Also, the ratio of the filler is not particularly limited, and may be set in an appropriate range depending on the intended use.

The present application also relates to a precursor for preparing the composite, wherein the precursor may comprise, for example, the polymerizable composition and the filler as described above, or the prepolymer and the filler as described above.

The composite can be prepared in a known manner using the precursor. For example, the composite can be formed by curing the precursor.

In one example, the precursor may be prepared by combining a polymerizable composition comprising the compound of Formula 1 and the curing agent, or the prepolymer formed by pre-curing the polymerizable composition, in a state melted by heat or the like, with the filler, if necessary. For example, the precursor thus produced may be molded into a desired shape and then cured to prepare the above-described composite. The polymerizable composition or prepolymer has an appropriate processing temperature and a wide process temperature and superior curability, so that molding and curing can be efficiently performed in the above processes.

In the above processes, the method of forming the prepolymer or the like, and the method for preparing the composite by combining such a prepolymer or the like with the filler, followed by processing and curing, and the like may be carried out according to known methods.

### Advantageous Effects

The present application can provide a phthalonitrile resin, and a polymerizable composition and prepolymer using the same, which can exhibit excellent curability, a suitable processing temperature and a wide process window, and form a composite having excellent physical properties.

### Brief Description of Drawings

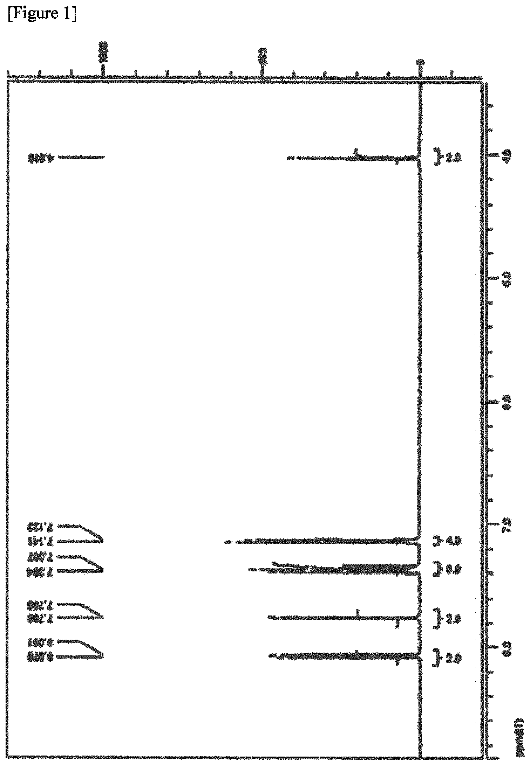

Figures 1 to 3 are NMR analysis results for the compounds prepared in Preparation Examples.

### Mode for Invention

Hereinafter, the phthalonitrile resin and the like of the present application will be specifically described by way of examples and comparative examples, but the scope of the resins and the like is not limited to the following examples.

### 1. NMR (nuclear magnetic resonance) analysis

NMR analysis was carried out by using a 500 MHz NMR equipment from Agilent as the manufacturer's manual. A sample for NMR measurement was prepared by dissolving the compound in DMSO (dimethyl sulfoxide)-d6.

### 2. DSC (differential scanning calorimetry) analysis

DSC analysis was carried out in a N₂ flow atmosphere using a Q20 system from TA instrument while raising the temperature from 35°C to 450°C at a heating rate of 10°C/min.

### 3. TGA (thermogravimetric analysis) analysis

TGA analysis was performed using a TGA e850 instrument from Mettler-Toledo. In the case of the compounds prepared in Preparation Examples, they were analyzed in a N₂ flow atmosphere while raising the temperature from 25°C to 800°C at a heating rate of 10°C/min, and in the case of compositions prepared in Examples and Comparative Examples, after post-curing them at a temperature of 375°C, they were analyzed in a N₂ flow atmosphere while raising the temperature from 25°C to 900°C at a heating rate of 10°C/min.

### Preparation Example 1. Synthesis of compound (PN1)

A compound of Formula A below was synthesized in the following manner. First, 28 g of 4,4'-bis(hydroxyphenylmethane) and 150 mL of DMF (dimethyl formamide) were introduced to a 500 mL 3 neck RBF (round-bottom flask) and dissolved by stirring at room temperature. 48.5 g of 4-nitrophthalonitrile was added thereto and 50 g of DMF was added thereto, and then dissolved by stirring. Subsequently, 58.1 g of potassium carbonate and 50 g of DMF were added together and then the temperature was raised to 85°C while stirring. After reaction for about 5 hours, the reactant is cooled to room temperature. The cooled reaction solution was neutralized and precipitated by pouring it into a 0.2 N hydrochloric acid aqueous solution. After filtering, it was washed with water. Then, the filtered reactant was dried in a vacuum oven at 100°C for one day. After removal of water and residual solvent, the desired compound was obtained in a yield of 85 wt%.

The NMR analysis results of the prepared compound of Formula A were shown in Figure 1, and the DSC and TGA analysis results were summarized in Table 1.

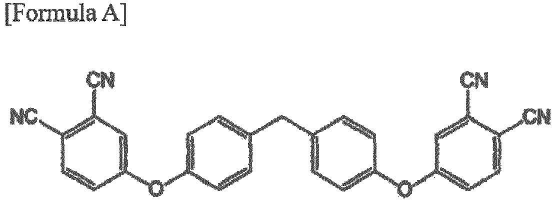

### Preparation Example 2. Synthesis of mixture (PN2)

A mixture of the compound of Formula A above, a compound of Formula B below and a compound of Formula C below was synthesized in the following manner. First, 28 g of a mixture of 4,4'-bis(hydroxyphenylmethane), 2,4'-bis(hydroxyphenylmethane) and 2,2'-bis(hydroxyphenylmethane) and 150 ml of DMF (dimethyl formamide) were introduced to a 500 mL 3 neck RBF (round-bottom flask) and dissolved by stirring at room temperature. In the mixture, the weight ratio of 4,4'-bis(hydroxyphenylmethane), 2,4'-bis(hydroxyphenylmethane) and 2,2'-bis(hydroxyphenylmethane) was 60:35:5 (4,4'-bis(hydroxyphenylmethane): 2,4'-bis(hydroxyphenylmethane): 2,2'-bis(hydroxyphenylmethane)). 48.5 g of 4-nitrophthalonitrile was added thereto, and 50 g of DMF was added and then dissolved by stirring. Subsequently, 58.1 g of potassium carbonate and 50 g of DMF were added together and then the temperature was raised to 85°C while stirring. After reaction for about 5 hours, the reactant is cooled to room temperature. The cooled reaction solution was neutralized and precipitated by pouring it into a 0.2 N hydrochloric acid aqueous solution. After filtering, it was washed with water. Then, the filtered reactant was dried in a vacuum oven at 100°C for one day. After removal of water and residual solvent, the desired mixture was obtained in a yield of 80 wt%.

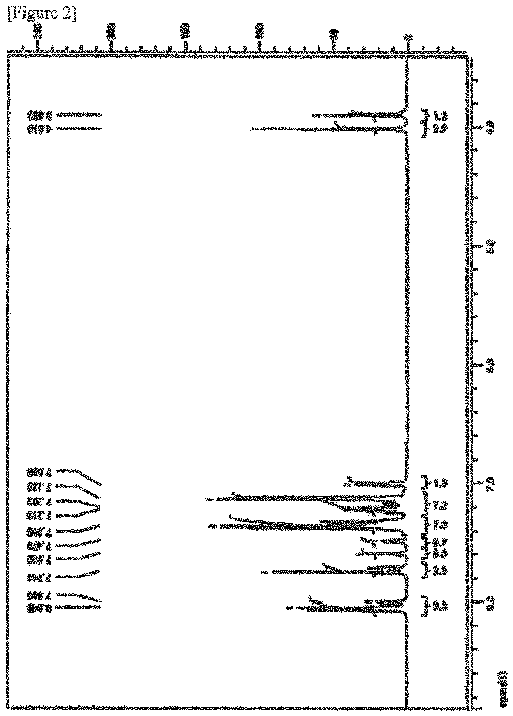

The NMR analysis results of the prepared mixture of the compound of Formula A, the compound of Formula B and the compound of Formula C were shown in Figure 2, and the DSC and TGA analysis results were summarized in Table 1.

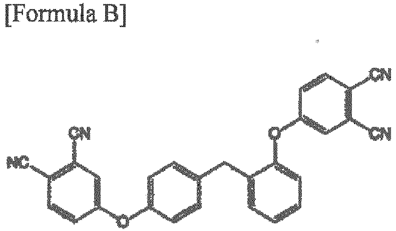

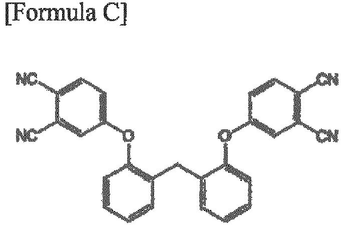

### Preparation Example 3. Synthesis of compound (PN3)

25.3 g of 4,4'-dihydroxybiphenyl ether and 100 mL of DMF (dimethyl formamide) were introduced to a 3 neck RBF (round-bottom flask) and dissolved by stirring at room temperature. 43.3 g of 4-nitropthalonitrile was added thereto, and 70 g of DMF was added and then dissolved by stirring. Subsequently, 51.8 g of potassium carbonate and 50 g of DMF were added together and then the temperature was raised to 85°C while stirring. After reaction for about 5 hours, the reactant is cooled to room temperature. The cooled reaction solution was neutralized and precipitated by pouring it into a 0.2 N hydrochloric acid aqueous solution. After filtering, it was washed with water. Then, the filtered reactant was dried in a vacuum oven at 100°C for one day. After removal of water and residual solvent, the compound of Formula D below (PN3) was obtained in a yield of 88 wt%.

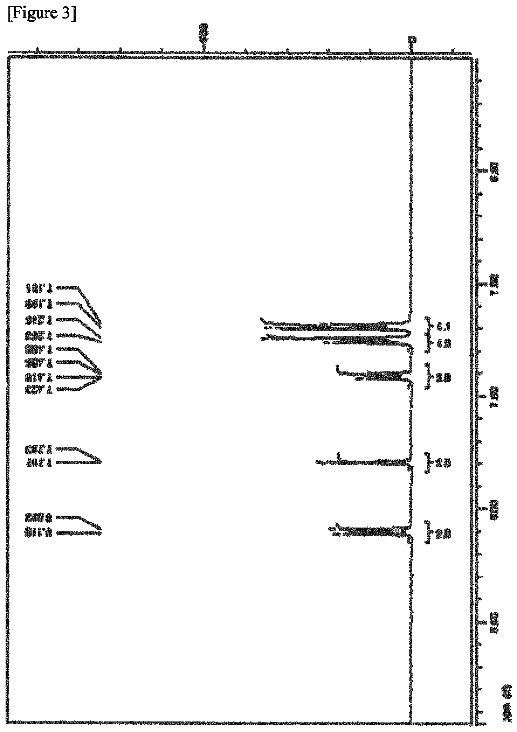

The NMR results for the compound were shown in Figure 3, and the DSC and TGA analysis results were summarized in Table 1.

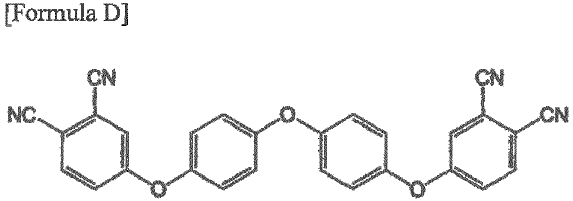

### Preparation Example 4. Synthesis of compound (PN4)

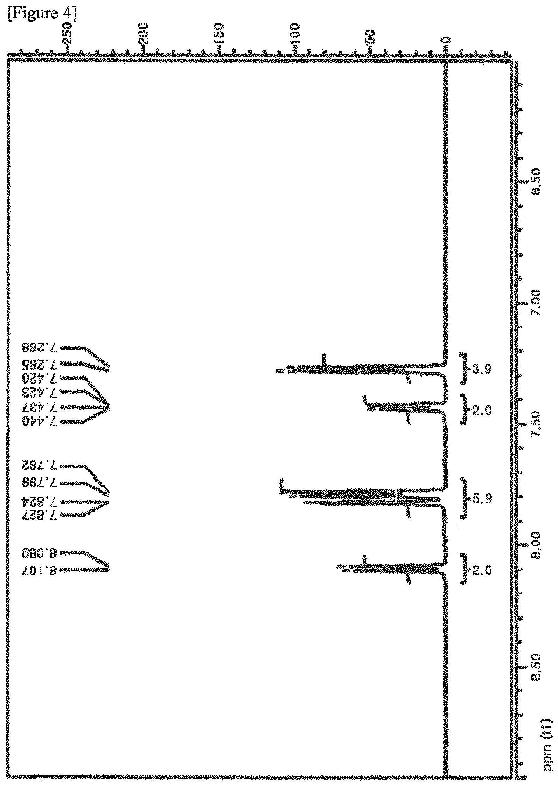

27.9 g of 4,4'-dihydroxybiphenyl and 100 mL of DMF (dimethyl formamide) were introduced to a 3 neck RBF (round-bottom flask) and dissolved by stirring at room temperature. 51.9 g of 4-nitropthalonitrile was added thereto, and 50 g of DMF was added and then dissolved by stirring. Subsequently, 62.2 g of potassium carbonate and 50 g of DMF were added together and then the temperature was raised to 85°C while stirring. After reaction for about 5 hours, the reactant is cooled to room temperature. The cooled reaction solution was neutralized and precipitated by pouring it into a 0.2 N hydrochloric acid aqueous solution. After filtering, it was washed with water. Then, the filtered reactant was dried in a vacuum oven at 100°C for one day. After removal of water and residual solvent, the compound of Formula E below (PN4) was obtained in a yield of 83 wt%. The NMR results for the compound were shown in Figure 4, and the DSC and TGA analysis results were summarized in Table 1.

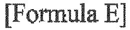

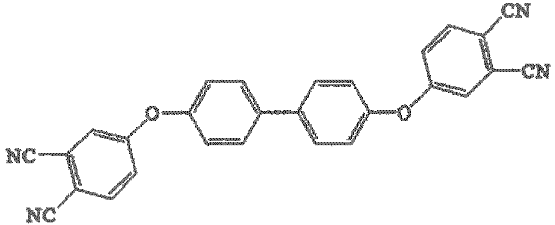

### Preparation Example 5. Synthesis of compound (PN5)

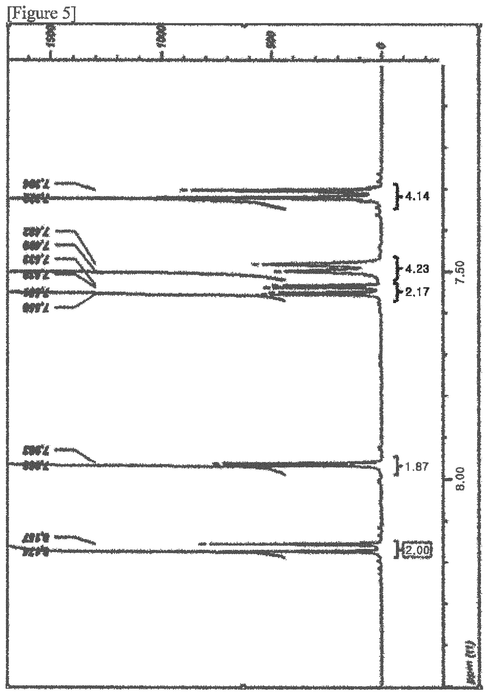

50.4 g of 4,4'-bis(4-hydroxyphenyl)hexafluoropropane and 150 mL of DMF (dimethyl formamide) were introduced to a 3 neck RBF (round-bottom flask), and dissolved by stirring at room temperature. 51.9 g of 4-nitropthalonitrile was added thereto, and 50 g of DMF was added and then dissolved by stirring. Subsequently, 62.2 g of potassium carbonate and 50 g of DMF were added together and then the temperature was raised to 85°C while stirring. After reaction for about 5 hours, the reactant is cooled to room temperature. The cooled reaction solution was neutralized and precipitated by pouring it into a 0.2 N hydrochloric acid aqueous solution. After filtering, it was washed with water. Then, the filtered reactant was dried in a vacuum oven at 100°C for one day. After removal of water and residual solvent, the compound of Formula F below (PN5) was obtained in a yield of 87 wt%. The NMR results for the compound were shown in Figure 5, and the DSC and TGA analysis results were summarized in Table 1.

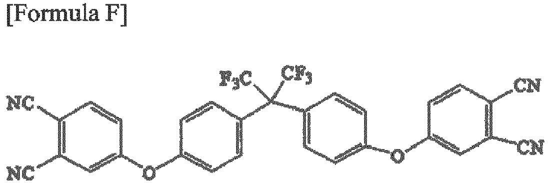

### Compound (CA)

A compound of Formula G below used as a curing agent was obtained from a commercial product from TCI (Tokyo Chemical Industry Co., Ltd.) and used without further purification.

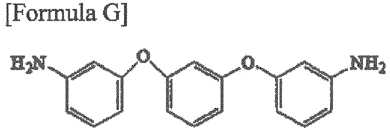

DSC and TGA analysis results for the compounds (PN1, PN2 and PN3) of Preparation Examples 1 to 5 are summarized in Table 1 below. From the results in Table 1 below, the compound or mixture of Preparation Example 1 (reference example that is not according to the present invention) or 2 according to the present application has a low processing temperature, and thus it can be predicted that it is possible to prepare a prepolymer at a low temperature, whereby it can secure a wide process window and exhibit excellent heat resistance characteristics.

On the other hand, in Table 1 below, in the case of the mixture of Preparation Example 2, it was in a form of a mixture and thus the melting temperature (Tm) was confirmed to be two. In the case of the mixture, since the melting temperature was lowered over a single compound, it was confirmed to be advantageous in terms of processability.

Also, from the following results, it can be confirmed that the compound or the mixture itself of Preparation Example 1 or 2 has superior heat resistance characteristics to the compounds of Preparation Examples 3 to 5.

**[Table 1]**

| | | Processing temperature (melting temperature) (°C) | Residue at 800°C (%) |
|---|---|---|---|
| Preparation Example 1 (compound) | PN1 | 195 | 66.3 |
| Preparation Example 2 (mixture) | PN2 | 132, 174 | 66.7 |
| Preparation Example 3 (compound) | PN3 | 193 | 10.2 |
| Preparation Example 4 (compound) | PN4 | 235 | 1.1 |
| Preparation Example 5 (compound) | PN5 | 231 | 0.6 |

### Example 1 (reference example)

A polymerizable composition was prepared by compounding the curing agent (CA1, 1,3-bis(3-aminophenoxy)benzene) in the compound (PN1) of Preparation Example 1 such that about 0.15 mole per mole of the compound (PN1) was present. The results of performing DSC and TGA analyses of the composition are described in Table 2 below.

The composition was heated at each temperature of 220°C, 250°C, 280°C, 310°C and 340°C by 2 hours for a total of 10 hours and cured in an oven. The TGA analysis results performed on the composition after curing were summarized in Table 3 below.

### Example 2.

A polymerizable composition was prepared in the same manner as in Example 1, except that the mixture (PN2) of Preparation Example 2 was used instead of the compound (PN1) of Preparation Example 1. The results of performing DSC and TGA analyses of the composition are described in Table 2 below.

The composition was heated at each temperature of 220°C, 250°C, 280°C, 310°C and 340°C by 2 hours for a total of 10 hours and cured in an oven. The TGA analysis results performed on the composition after curing were summarized in Table 3 below.

### Comparative Example 1

A polymerizable composition was prepared in the same manner as in Example 1, except that the compound (PN3) of Preparation Example 3 was used instead of the compound (PN1) of Preparation Example 1. The results of performing DSC and TGA analyses of the composition are described in Table 2 below.

The composition was heated at each temperature of 220°C, 250°C, 280°C, 310°C and 340°C by 2 hours for a total of 10 hours and cured in an oven. The TGA analysis results performed on the composition after curing were summarized in Table 3 below.

### Comparative Example 2

A polymerizable composition was prepared in the same manner as in Example 1, except that the compound (PN4) of Preparation Example 4 was used instead of the compound (PN1) of Preparation Example 1. The results of performing DSC and TGA analyses of the composition are described in Table 2 below.

The composition was heated at each temperature of 220°C, 250°C, 280°C, 310°C and 340°C by 2 hours for a total of 10 hours and cured in an oven. The TGA analysis results performed on the composition after curing were summarized in Table 3 below.

### Comparative Example 3

A polymerizable composition was prepared in the same manner as in Example 1, except that the compound (PN5) of Preparation Example 5 was used instead of the compound (PN1) of Preparation Example 1. The results of performing DSC and TGA analyses of the composition are described in Table 2 below.

The composition was heated at each temperature of 220°C, 250°C, 280°C, 310°C and 340°C by 2 hours for a total of 10 hours and cured in an oven. The TGA analysis results performed on the composition after curing were summarized in Table 3 below.

The results of performing DSC and TGA analyses of the compositions of Examples and Comparative Examples are described in Table 2 below.

**[Table 2]**

| | Processing temperature (melting temperature) (°C) | Exothermal onset temperature (°C) | Process Window (°C) | Exothermic energy (J/g) |
|---|---|---|---|---|
| Example 1 | 188 | 293 | 105 | 200 |
| Example 2 | 164 | 281 | 154 | 235 |
| Comparative Example 1 | 190 | 292 | 102 | 41 |
| Comparative Example 2 | 229 | 289 | 60 | 47 |
| Comparative Example 3 | 226 | 361 | 135 | 11 |

**[Table 3]**

| | 5% decomposition temperature (°C) | 10% decomposition temperature (°C) | Residue at 800°C (%) |
|---|---|---|---|
| Example 1 | 496 | 540 | 77.6 |
| Example 2 | 496 | 540 | 77.8 |
| Comparative Example 1 | 481 | 493 | 67.0 |
| Comparative Example 2 | 496 | 539 | 76.5 |
| Comparative Example 3 | 495 | 521 | 65.3 |

From the results in Table 2, the present application has a low processing temperature, and thus it can be confirmed that it is possible to prepare a prepolymer at a low temperature, the wide process window is secured and it exhibits excellent heat resistance characteristics.

In addition, reviewing the curing exothermic energy measured by the DSC, it can be seen that in the case of Examples, the exothermic energy is higher than that of Comparative Examples, which means that one reaction of heat has efficiently progressed and the curing degree has increased.

Furthermore, from the results in Table 3, it can be confirmed that Examples 1 and 2 exhibit excellent heat resistance characteristics as compared with Comparative Examples.

## Claims

1. A phthalonitrile resin comprising a polymerized unit derived from a compound of Formula 1 below: 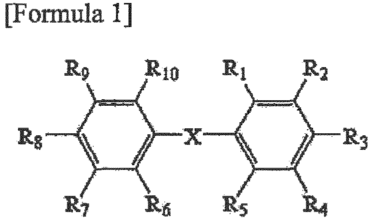 wherein, R₁ to R₁₀ are each independently hydrogen, an alkyl group, an alkoxy group, an aryl group or a substituent of Formula 2 below, provided that at least one of R₁ to R₅ is a substituent of Formula 2 below and at least one of R₆ to R₁₀ is a substituent of Formula 2 below, and X is an alkylene group or an alkylidene group, 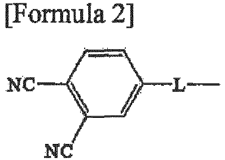 wherein, L is an alkylene group, an alkylidene group, an oxygen atom or a sulfur atom,
wherein the polymerized unit derived from the compound of Formula 1 comprises polymerized units of two or more compounds of Formulas 3 to 5 below: 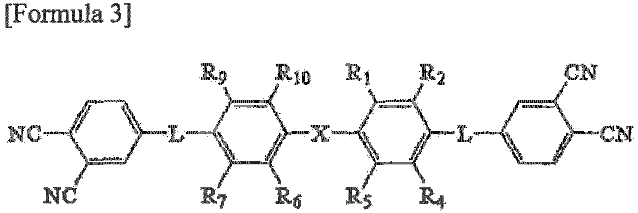 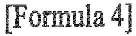 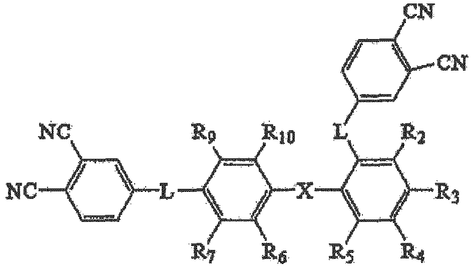 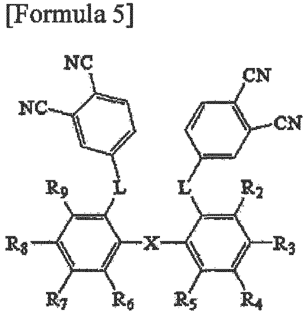 wherein, R₁ to R₁₀ are each independently hydrogen, an alkyl group, an alkoxy group or an aryl group, X is an alkylene group or an alkylidene group, and L is an alkylene group, an alkylidene group, an oxygen atom or a sulfur atom.

2. The phthalonitrile resin according to claim 1, wherein the polymerized unit derived from the compound of Formula 1 comprises the polymerized unit derived from the compound of Formula 3 and the polymerized unit of the compound of Formula 4 or 5.

3. The phthalonitrile resin according to claim 1, wherein the polymerized unit derived from the compound of Formula 1 comprises the polymerized unit derived from the compound of Formula 3, the polymerized unit derived from the compound of Formula 4 and the polymerized unit of the compound of Formula 5.

4. The phthalonitrile resin according to claim 1, wherein the polymerized unit derived from the compound of Formula 1 comprises 1 to 200 parts by weight of the polymerized unit derived from the compound of Formula 4 or 5 relative to 100 parts by weight of the polymerized unit derived from the compound of Formula 3.

5. The phthalonitrile resin according to claim 1, further comprising a polymerized unit of an aromatic amine compound.

6. A polymerizable composition comprising a compound of Formula 1 below and a curing agent: 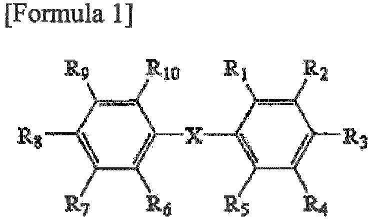 wherein, R₁ to R₁₀ are each independently hydrogen, an alkyl group, an alkoxy group, an aryl group or a substituent of Formula 2 below, provided that at least one of R₁ to R₅ is a substituent of Formula 2 below and at least one of R₆ to R₁₀ is a substituent of Formula 2 below, and X is an alkylene group or an alkylidene group, 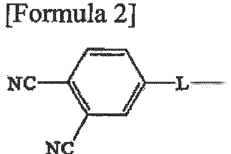 wherein, L is an alkylene group, an alkylidene group, an oxygen atom or a sulfur atom,
wherein the polymerizable composition comprises, as the compound of Formula 1, two or more compounds of Formulas 3 to 5 below: 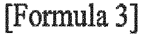 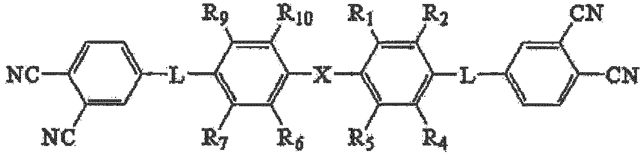 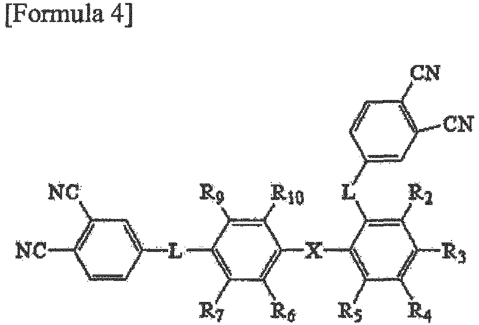 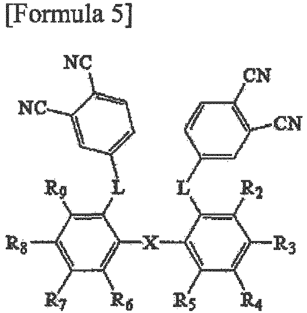 wherein, R₁ to R₁₀ are each independently hydrogen, an alkyl group, an alkoxy group or an aryl group, X is an alkylene group or an alkylidene group, and L is an alkylene group, an alkylidene group, an oxygen atom or a sulfur atom.

7. The polymerizable composition according to claim 6, comprising the compound of Formula 3; the compound of Formula 4 or 5; and a curing agent.

8. The polymerizable composition according to claim 6, comprising the compound of Formula 3, the compound of Formula 4, the compound of Formula 5 and a curing agent.

9. The polymerizable composition according to claim 6, wherein the curing agent is an aromatic amine compound, a phenol compound, an inorganic acid, an organic acid, a metal or a metal salt.

10. The polymerizable composition according to claim 6, wherein the polymerizable composition has a processing temperature in a range of 50°C to 200°C.

11. The polymerizable composition according to claim 10, wherein the polymerizable composition has an absolute value of a difference between the processing temperature and a curing reaction onset temperature of 50°C or more.

12. A prepolymer which is formed by reaction of the polymerizable composition of claim 6.

13. A composite comprising the phthalonitrile resin of claim 1.

14. The composite according to claim 13, further comprising a filler.

15. A method for preparing a composite comprising a step of curing a precursor comprising the polymerizable composition of claim 6 or the prepolymer of claim 12.

## Patentansprüche

1. Phthalonitrilharz, das eine polymerisierte Einheit umfasst, die sich von einer Verbindung der nachstehenden Formel 1 ableitet: 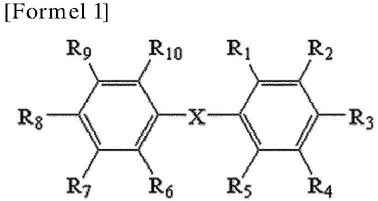 wobei R₁ bis R₁₀ jeweils unabhängig voneinander Wasserstoff, eine Alkylgruppe, eine Alkoxygruppe, eine Arylgruppe oder ein Substituent der nachstehenden Formel 2 sind, vorausgesetzt, dass mindestens einer der Reste R₁ bis R₅ ein Substituent der nachstehenden Formel 2 ist und mindestens einer der Reste R₆ bis R₁₀ ein Substituent der nachstehenden Formel 2 ist, und X eine Alkylengruppe oder eine Alkylidengruppe ist, 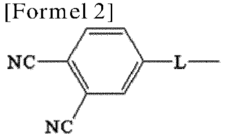 wobei L eine Alkylengruppe, eine Alkylidengruppe, ein Sauerstoffatom oder ein Schwefelatom ist,
wobei die polymerisierte Einheit, die von der Verbindung der Formel 1 abgeleitet ist, polymerisierte Einheiten von zwei oder mehr Verbindungen der Formeln 3 bis 5 unten umfasst: 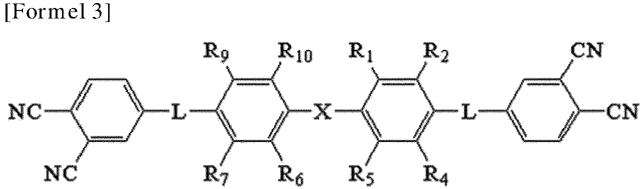 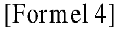 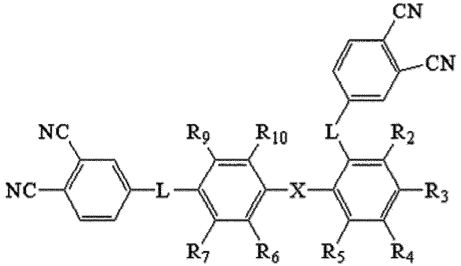 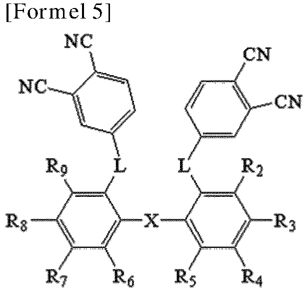 wobei R₁ bis R₁₀ jeweils unabhängig voneinander Wasserstoff, eine Alkylgruppe, eine Alkoxygruppe oder eine Arylgruppe sind, X eine Alkylengruppe oder eine Alkylidengruppe ist und L eine Alkylengruppe, eine Alkylidengruppe, ein Sauerstoffatom oder ein Schwefelatom ist.

2. Phthalonitrilharz nach Anspruch 1, bei dem die polymerisierte Einheit, die von der Verbindung der Formel 1 abgeleitet ist, die polymerisierte Einheit, die von der Verbindung der Formel 3 abgeleitet ist, und die polymerisierte Einheit der Verbindung der Formel 4 oder 5 umfasst.

3. Phthalonitrilharz nach Anspruch 1, bei dem die polymerisierte Einheit, die von der Verbindung der Formel 1 abgeleitet ist, die polymerisierte Einheit, die von der Verbindung der Formel 3 abgeleitet ist, die polymerisierte Einheit, die von der Verbindung der Formel 4 abgeleitet ist, und die polymerisierte Einheit der Verbindung der Formel 5 umfasst.

4. Phthalonitrilharz nach Anspruch 1, bei dem die polymerisierte Einheit, die von der Verbindung der Formel 1 abgeleitet ist, 1 bis 200 Gewichtsteile der polymerisierten Einheit, die von der Verbindung der Formel 4 oder 5 abgeleitet ist, bezogen auf 100 Gewichtsteile der polymerisierten Einheit, die von der Verbindung der Formel 3 abgeleitet ist, umfasst.

5. Phthalonitrilharz nach Anspruch 1, das ferner eine polymerisierte Einheit einer aromatischen Aminverbindung umfasst.

6. Polymerisierbare Zusammensetzung, die eine Verbindung der nachstehenden Formel 1 und einen Härter umfasst: 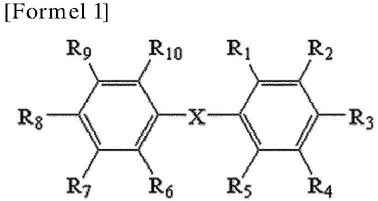 wobei R₁ bis R₁₀ jeweils unabhängig voneinander Wasserstoff, eine Alkylgruppe, eine Alkoxygruppe, eine Arylgruppe oder ein Substituent der nachstehenden Formel 2 sind, vorausgesetzt, dass mindestens einer der Reste R₁ bis R₅ ein Substituent der nachstehenden Formel 2 ist und mindestens einer der Reste R₆ bis R₁₀ ein Substituent der nachstehenden Formel 2 ist, und X eine Alkylengruppe oder eine Alkylidengruppe ist, 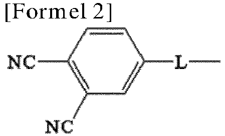 wobei L eine Alkylengruppe, eine Alkylidengruppe, ein Sauerstoffatom oder ein Schwefelatom ist,
wobei die polymerisierbare Zusammensetzung als Verbindung der Formel 1 zwei oder mehr Verbindungen der nachstehenden Formeln 3 bis 5 umfasst: 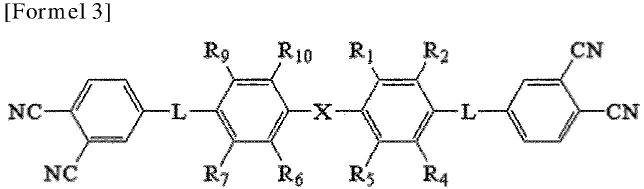 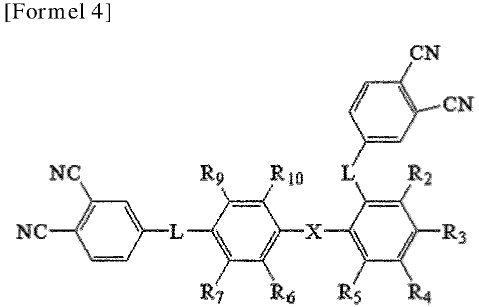 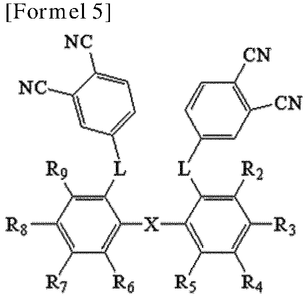 wobei R₁ bis R₁₀ jeweils unabhängig voneinander Wasserstoff, eine Alkylgruppe, eine Alkoxygruppe oder eine Arylgruppe sind, X eine Alkylengruppe oder eine Alkylidengruppe ist und L eine Alkylengruppe, eine Alkylidengruppe, ein Sauerstoffatom oder ein Schwefelatom ist.

7. Polymerisierbare Zusammensetzung nach Anspruch 6, die die Verbindung der Formel 3, die Verbindung der Formel 4 oder 5 und einen Härter umfasst.

8. Poolymerisierbare Zusammensetzung nach Anspruch 6, die die Verbindung der Formel 3, die Verbindung der Formel 4, die Verbindung der Formel 5 und einen Härter.

9. Polymerisierbare Zusammensetzung nach Anspruch 6, bei der der Härter eine aromatische Aminverbindung, eine Phenolverbindung, eine anorganische Säure, eine organische Säure, ein Metall oder ein Metallsalz ist.

10. Polymerisierbare Zusammensetzung nach Anspruch 6, bei der die polymerisierbare Zusammensetzung eine Verarbeitungstemperatur in einem Bereich von 50°C bis 200°C aufweist.

11. Polymerisierbare Zusammensetzung nach Anspruch 10, bei der die polymerisierbare Zusammensetzung einen absoluten Wert einer Differenz zwischen der Verarbeitungstemperatur und einer Anfangstemperatur der Aushärtungsreaktion von 50°C oder mehr aufweist.

12. Präpolymer, das durch die Reaktion der polymerisierbaren Zusammensetzung nach Anspruch 6 gebildet wird.

13. Verbundwerkstoff, der das Phthalonitrilharz nach Anspruch 1 umfasst.

14. Verbundwerkstoff nach Anspruch 13, der ferner einen Füllstoff umfasst.

15. Verfahren zur Herstellung eines Verbundwerkstoffes, das einen Schritt des Härtens eines Vorläufers umfasst, der die polymerisierbare Zusammensetzung nach Anspruch 6 oder das Präpolymer nach Anspruch 12 umfasst.

## Revendications

1. Résine de phtalonitrile comprenant un motif polymérisé dérivé d'un composé de la formule 1 ci-dessous : 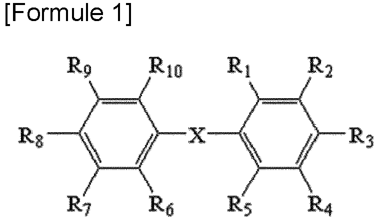 dans laquelle, R₁ à R₁₀ représentent chacun indépendamment l'hydrogène, un groupe alkyle, un groupe alcoxy, un groupe aryle ou un substituant de la formule 2 ci-dessous, à condition qu'au moins un des R₁ à R₅ soit un substituant de la formule 2 ci-dessous et qu'au moins un des R₆ à R₁₀ soit un substituant de la formule 2 ci-dessous, et que X soit un groupe alkylène ou un groupe alkylidène, 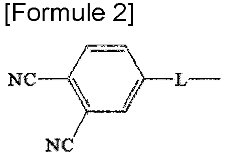 dans laquelle L représente un groupe alkylène group, un groupe alkylidène, un groupe oxygène ou un atome de sulfure,
dans laquelle le motif polymérisé dérivé du composé de la formule 1 comprend des motifs polymérisés de deux ou de plusieurs composés répondant aux formules 3 à 5 ci-dessous ; 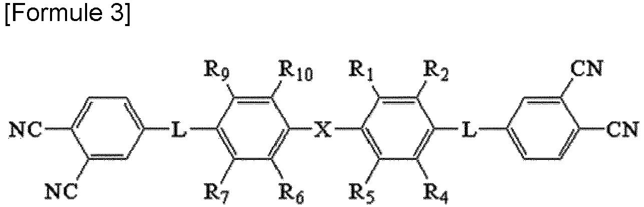 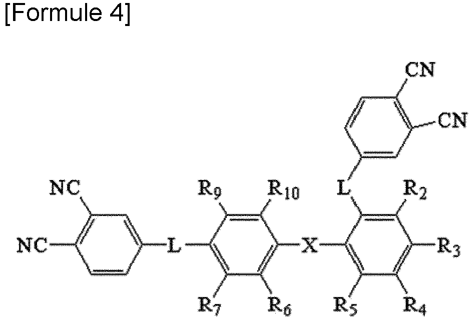 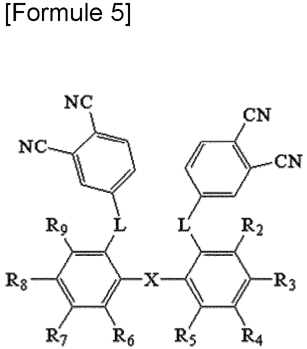 dans lesquelles, R₁ à R₁₀ représentent chacun indépendamment l'hydrogène, un groupe alkyle, un groupe alcoxy ou un groupe aryle, X représente un groupe alkylène ou un groupe alkylidène, et L représente un groupe alkylène, un groupe alkylidène, un atome d'oxygène ou un atome de soufre.

2. Résine de phtalonitrile selon la revendication 1, dans laquelle le motif polymérisé dérivé du composé de la formule 1 comprend le motif polymérisé dérivé du composé de la formule 3 et le motif polymérisé du composé de la formule 4 ou de la formule 5.

3. Résine de phtalonitrile selon la revendication 1, dans laquelle le motif polymérisé dérivé du composé de la formule 1 comprend le motif polymérisé dérivé du composé de la formule 3, le motif polymérisé dérivé du composé de la formule 4 et le motif polymérisé du composé de la formule 5.

4. Résine de phtalonitrile selon la revendication 1, dans laquelle le motif polymérisé dérivé du composé de la formule 1 comprend 1 à 200 parties en poids du motif polymérisé dérivé du composé de la formule 4 ou de la formule 5 par rapport à 100 parties en poids du motif polymérisé dérivé du composé de la formule 3.

5. Résine de phtalonitrile selon la revendication 1, comprenant en outre un motif polymérisé d'un composé amine aromatique.

6. Composition polymérisable comprenant un composé de la formule 1 ci-dessous et un agent de durcissement : 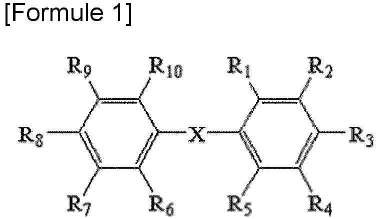 dans laquelle, R₁ à R₁₀ représentent chacun indépendamment l'hydrogène, un groupe alkyle, un groupe alcoxy, un groupe aryle ou un substituant de la formule 2 ci-dessous, à condition qu'au moins un des R₁ à R₅ soit un substituant de la formule 2 ci-dessous et qu'au moins un des R₆ à R₁₀ soit un substituant de la formule 2 ci-dessous, et que X soit un groupe alkylène ou un groupe alkylidène, 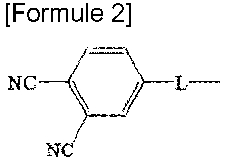 dans laquelle, L représente un groupe alkylène, un groupe alkylidène, un atome d'oxygène ou un atome de soufre,
dans laquelle la composition polymérisable comprend, en plus du composé de la formule 1, deux ou plusieurs composés des formules 3 à 5 ci-dessous : 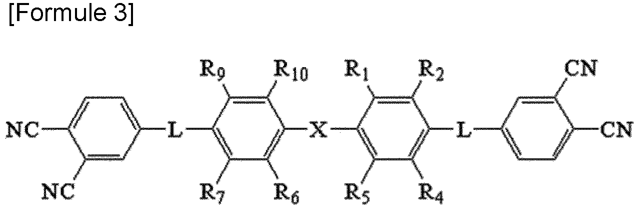 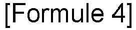 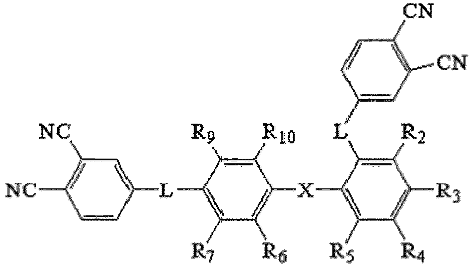 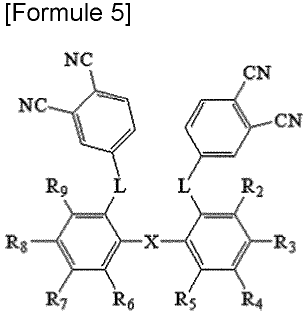 dans lesquelles, R₁ à R₁₀ représentent chacun indépendamment l'hydrogène, un groupe alkyle, un groupe alcoxy ou un groupe aryle, X représente un groupe alkylène ou un groupe alkylidène, et L représente un groupe alkylène, un groupe alkylidène, un atome d'oxygène ou un atome de soufre.

7. Composition polymérisable selon la revendication 6, comprenant le composé de la formule 3; le composé de la formule 4 ou de la formule 5 et un agent de durcissement.

8. Composition polymérisable selon la revendication 6, comprenant le composé de la formule 3, le composé de la formule 4, le composé de la formule 5 et un agent de durcissement.

9. Composition polymérisable selon la revendication 6, dans laquelle l'agent de durcissement est un composé amine aromatique, un composé phénol, un acide inorganique, un acide organique, un métal ou un sel métallique.

10. Composition polymérisable selon la revendication 6, la composition polymérisable ayant une température de traitement comprise dans une plage de 50°C à 200°C.

11. Composition polymérisable selon la revendication 10, la composition polymérisable ayant une valeur absolue de la différence entre la température de traitement et une température de début de réaction de durcissement de 50°C ou plus.

12. Prépolymère qui est formé par réaction de la composition polymérisable selon la revendication 6.

13. Composite comprenant la résine de phtalonitrile selon la revendication 1.

14. Composite selon la revendication 13, comprenant en outre une matière de remplissage.

15. Procédé de préparation d'un composite comprenant une étape de durcissement d'un précurseur comprenant la composition polymérisable selon la revendication 6 ou le prépolymère selon la revendication 12.
